(19) Europäisches Patentamt
European Patent Office
Office européen des brevets

(11) **EP 4 141 752 A1**

(12) **EUROPEAN PATENT APPLICATION**

(43) Date of publication:
**01.03.2023  Bulletin 2023/09**

(21) Application number: **21306155.9**

(22) Date of filing: **26.08.2021**

(51) International Patent Classification (IPC):
**G06N 10/60** (2022.01)    **G06Q 10/04** (2012.01)

(52) Cooperative Patent Classification (CPC):
**G06N 10/60; G06F 17/10; G06Q 10/04**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **TotalEnergies OneTech**
**92400 Courbevoie (FR)**

(72) Inventors:
• **Allybokus, Zaid**
  **93500 Pantin (FR)**
• **Rancic, Marko**
  **75014 Paris (FR)**

(74) Representative: **Lavoix**
  **2, place d'Estienne d'Orves**
  **75441 Paris Cedex 09 (FR)**

(54) **METHOD FOR OPTIMIZING A FUNCTIONING RELATIVE TO A SET OF ELEMENTS AND ASSOCIATED COMPUTER PROGRAM PRODUCT**

(57)    The present invention relates to a method for optimizing a functioning relative to a set of elements, the method comprising:
- obtaining a graph (G) comprising vertices (Ve) and edges (Ed), the vertices (Ve) representing the elements, the edges (Ed) representing the properties between the elements,
- determining a partition of the vertices (Ve) of the graph (G) between two separate subsets so as to fulfill a partition criterion, the partition criterion stating that a cut number relative to the cut of the edges (Ed) of the graph (G) to obtain the partition is maximum, the determining phase being implemented by a quantum computer,
- optimizing a functioning relative to the set of elements by separating the elements of the set of elements between two separate subsets on the basis of the determined partition.

FIG.3

**Description**

TECHNICAL FIELD OF THE INVENTION

The present invention concerns a method for optimizing a functioning relative to a set of elements. The method also concerns an associated computer program product.

BACKGROUND OF THE INVENTION

In B-to-B or B-to-C, the exchange of goods or services between entities in an efficient way implies determining in advance paths between the different exchange locations. This issue appears crucial to control the costs in terms of energy consumption and travel time.
However, this problem is not solvable in reasonable time when a large number of exchange locations are involved.
Hence, the paths are typically chosen relying on some simplified mapping of the problems or arbitrary human choices.
Consequently, such paths are usually not optimal in terms of energy consumption and travel time.

SUMMARY OF THE INVENTION

There exists a need for a method enabling to optimize a functioning relative to a set of elements, such as mobility between exchange locations.
To this end, the invention relates to a method for optimizing a functioning relative to a set of elements, each element of the set having a property relative to each other element of the set, the method comprising the following phases:

- obtaining a graph comprising vertices and edges, the edges linking the vertices to one another so that each vertice is linked to at least another vertice, the vertices representing the elements of the set of elements, the edges representing the properties between the elements of the set of elements,
- determining a partition of the vertices of the graph between two separate subsets so as to fulfill a partition criterion, the partition implying cutting at least an edge of the graph, the partition criterion stating that a cut number relative to the cut of the edges of the graph to obtain the partition is maximum, the determining phase being implemented by a quantum computer adapted to carry out quantum operations on qubits, the determining phase comprising the following steps:

  • obtaining a Laplacian matrix corresponding to the graph,
  • transforming the Laplacian matrix of the graph by using Pauli matrices to obtain a transformed Laplacian,
  • setting a random value for at least one variational parameter, the value of the or each variational parameter enabling to define a partition of the vertices of the graph between the two separate subsets,
  • determining the cut number for the partition corresponding to the set variational parameter(s) on the basis of the transformed Laplacian, and
  • repeating the setting step and the determining step until the cut number is maximal so as to fulfill the partition criterion, the determined partition being obtained with the value of the or each variational parameter corresponding to the maximum cut number, and

- optimizing a functioning relative to the set of elements by separating the elements of the set of elements between two separate subsets on the basis of the determined partition.

The method according to the invention may comprise one or more of the following features considered alone or in any combination that is technically possible:

- the cut number is determined on the basis of the output of a partition function whose input data comprise the or each variational parameter, the partition function depending on the number of vertices of the graph and on the number of qubits of the quantum computer enabling to carry out the method;
- the partition function comprises a multi-qubit diagonal quantum gate whose elements depends on the or each variational parameter;
- the partition function is expressed as follows:

$$U = diag\left(e^{i\pi A_1}, e^{i\pi A_2}, ..., e^{i\pi A_{|V|-1}}, 1, ..., 1\right) H_1 \otimes H_2 \otimes ... \otimes H_n$$

where:

- $U$ is the partition function,
- $(A_1, ..., A_{|V|-1})$ are either variational parameters or variational functions depending on at least one variational parameter,
- $diag(\theta_1, ..., \theta_{|V|-1})$ is a multi-qubit diagonal quantum gate applied to $\theta_1, ..., \theta_{|V|-1}$,
- $e^{iX} = \cos(X) + i.\sin(X)$,
- $|V|$ is the number of vertices of the graph,
- $n$ is the number of qubits of the quantum computer enabling to carry out the method,
- $H_j$ is a single qubit Haddamard gate applied to the qubit j, and
- $\otimes$ is a tensor product;

- the cut number is given by the following formula:

$$N_{cuts} = 2^{n-2}\langle 0 \mid UL'U \mid 0 \rangle$$

where:

- $N_{cuts}$ is the cut number,
- $n$ is the number of qubits of the quantum computer enabling to carry out the method,
- $U$ is the partition function,
- $L'$ is the transformed Laplacian of the graph, and
- $\langle \Phi |$ is the bra of $\Phi$ in a bra-ket notation, and
- $| \Psi \rangle$ is the ket of $\Psi$ in a bra-ket notation;

- the number of qubits of the quantum computer enabling to carry out the method is given by the following formula:

$$n = ceil(\log_2 \mid V \mid)$$

where:

- $n$ is the number of qubits of the quantum computer enabling to carry out the method,
- $|V|$ is the number of vertices of the graph,
- $ceil(X)$ is equal to the least integer greater than or equal to X, and
- $\log_2(X)$ is the binary logarithm of X;

- the method involved only one variational parameter enabling to compute the output of variational functions, the number of variational functions depends on the number of vertices, each variational function being associated with a different vertice of the graph, the outputs of the variational functions enabling to define a partition of the vertices of the graph between two separate subsets;
- each variational function associated with a vertice of the graph is given by the following formula:

$$R_f(x, k, m) = \exp\left(- \exp\left(2^{m-k} \sin\left(2^k x\right) + x_0(k)\right)\right)$$

where:

- $R_f$ is the variational function,
- $x$ is a variational parameter comprised between 0 and $\pi$,
- $m$ is a parameter which is superior or equal to $|V|+1$, m is for example fixed by a user,
- $k$ corresponds to the number affected to the associated vertice Ve, k being comprised between 1 and $|V|-1$,

- $|V|$ is the number of vertices Ve of the graph G,
- exp(X) is the exponential of X, and
- $$x_0(k) = \arcsin(\frac{\log_2(-\log_2(0,5))}{2^k})$$ ;

- the property between each of two elements of the set of elements is :

    - the existence or not of a connection between the two elements, such as a physical connection or a wireless connection, or
    - a distance separating the two elements, or
    - a level of dangerousness of infecting one or both the elements with a virus;

- the property between each of two elements of the set of elements is a distance separating the two elements, the edges of the graph linking all the vertices of the graph to one another, each edge being associated with a weight depending on the distance separating the two elements corresponding to the vertices linked by said edge, the cut number for each partition being equal to the sum of the weights of the edges cut to obtain the partition;
- the elements are exchange locations of goods or services, the functioning relative to the set of elements comprises the determination of paths through all the elements of the set of elements, the efficiency of the functioning being optimized by determining separate paths for the elements belonging to separate subsets;
- the elements of the set are electronic devices, each device being directly or indirectly in communication with the other devices of the set, at least one element of the set being infected with a virus, the property between each of two elements of the set of elements being the existence or not of a direct communication linking an infected device and a non-infected device, the cut number for each partition being equal to the number of edges to be cut to obtain the partition;
- the elements of the set are electronic devices, the property between each of two elements of the set of elements being a level of dangerousness of infecting one or both the elements with a virus, each edge being associated with a weight depending on the level of dangerousness between the two elements corresponding to the vertices linked by said edge, the cut number for each partition being equal to the sum of the weights of the edges cut to obtain the partition;

The invention also relates to a computer program product comprising a readable information carrier having stored thereon a computer program comprising program instructions, the computer program being loadable onto a data processing unit and causing a method as previously described, to be carried out when the computer program is carried out on the data processing unit.

The invention also relates to a readable information carrier on which a computer program product as previously described, is stored.

BRIEF DESCRIPTION OF THE DRAWINGS

The invention will be easier to understand in view of the following description, provided solely as an example and with reference to the appended drawings in which:

- Figure 1 is a flowchart of an example of implementation of a method for optimizing a functioning relative to a set of elements,
- Figure 2 is a schematic representation of an example of a graph having vertices linked by edges,
- Figure 3 is a schematic representation of a partition of the vertices of the graph of figure 2 between two separate subsets so as to fulfill a partition criterion,
- Figure 4 is a schematic representation of exchange locations of good or services and of an initial location which is the departure for paths between the different exchange locations, and
- Figure 5 is a schematic representation of a separation of the exchange locations of figure 4 in subsets and of an example of a path between the exchange locations of one of the subset.

DETAILED DESCRIPTION OF SOME EMBODIMENTS

At least some phases of the method for optimizing a functioning relative to a set of elements, which will be described in details later in the description, is implemented by a quantum computer.

A quantum computer is an array of qubits together with some hardware to manipulate these qubits. A quantum computer is adapted to carry out quantum operations on qubits.

A quantum computer uses the quantum properties of matter, such as superposition and entanglement, to perform operations on data. Unlike a classical computer based on transistors working on binary data (coded on bits, 0 or 1), the quantum computer works on qubits whose quantum state can have infinite values.

In particular, a qubit refers to a quantum mechanical two-level system. For example, a qubit comprises two quantum basis states I0> and I1> representing possible quantum states of the qubit. According to the superposition principle of quantum mechanics, every superposition of the form al0> + bl1> (a and b being complex numbers and aa*+bb*=1) is a possible quantum state of the qubit.

For example, the quantum computer is realized using ultracold atoms, quantum dots, trapped ions or superconducting qubits.

In an example of representation, the quantum computer could be represented as entity comprising a processor comprising a data processing unit, memories, a reader for information media, and optionally a human machine interface.

In an example of representation, the quantum computer interacts with a computer program product. In an example of representation, the computer program product comprises an information medium. On the information medium is stored the computer program comprising program instructions.

In an example of representation, the computer program is loadable on the quantum computer and is adapted to entail the implementation of a method for optimizing a functioning relative to a set of elements when the computer program is loaded on the processing unit of the quantum computer.

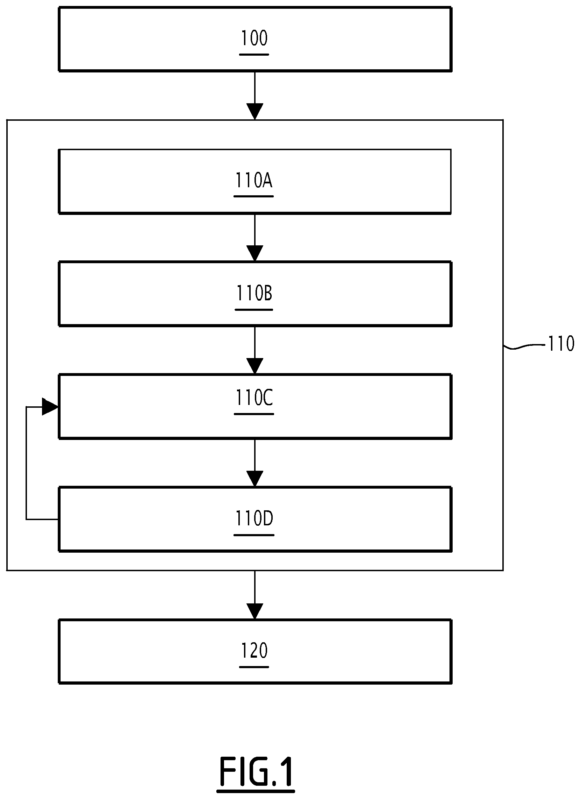

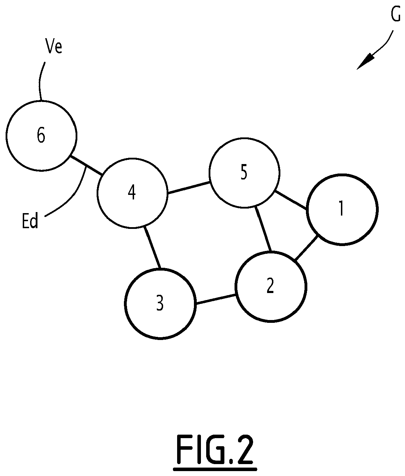

Operation of the quantum computer will now be described with reference to figure 1, which diagrammatically illustrates an example of implementation of a method for optimizing a functioning relative to a set of elements, and to figures 2 to 5 which illustrate in more detail certain phases of this method.

Each element $E_i$ of the set of elements $E_1$, ..., $E_n$ has a property relative to each other element $E_j$ of the set.

The property between each of two elements $E_i$, $E_j$ of the set of elements is, for example, the existence or not of a connection between the two elements $E_i$, $E_j$. In this case, all the elements of the set are connected directly or indirectly (via one or several other elements) to each other element of the set. The connection is, for example, a physical connection (wire, physical link), or a wireless connection (telecommunication such as wifi).

In another example, the property between each of two elements $E_i$, $E_j$ of the set of elements $E_1$, ..., $E_n$ is a distance separating the two elements $E_i$, $E_j$. The distance is, for example, a straight-line distance. The distance is, for example, an Euclidean distance.

In another example, the property between each of two elements $E_i$, $E_j$ of the set of elements $E_1$, ..., $E_n$ is a level of dangerousness of infecting one or both the elements with a virus.

The elements $E_1$, ..., $E_n$ are preferably elements of an environment. The elements $E_1$, ..., $E_n$ are, for example, physical objects or locations.

The aim of the described method is to optimize a functioning relative to a set of elements $E_1$, ..., $E_n$. The functioning depends on the set of elements $E_1$, ..., $E_n$ and of the properties of the elements $E_1$, ..., $E_n$. The functioning is for example the determination of paths between the elements, or the separation of the elements. By optimizing a functioning, it is understood optimizing the efficiency of the functioning, for example, in terms of energy consumption or travel time.

To do that, the method aims at finding a partition of the set of elements $E_1$, ..., $E_n$ in subsets according to a partition criterion that will be described later in the description.

The method comprises a phase 100 of obtaining a graph G describing the set of elements $E_1$, ..., $E_n$ and the properties of the elements $E_1$, ..., $E_n$ of the set. The phase 100 is, for example, carried out by a user, or a classical computer (that is to say a computer operating with bits), or a quantum computer.

The graph G comprises vertices Ve and edges Ed. The edges Ed link the vertices Ve to one another so that each vertice Ve is directly linked to at least another vertice Ve and indirectly linked (i.e. via one or several other vertices) to each other vertice Ve. Hence, the vertices Ve of the graph G form one single block of vertices Ve, i.e. there is no isolated vertice Ve. The vertices Ve represent the elements $E_1$, ..., $E_n$ of the set of elements. The edges Ed represent the properties between the elements $E_1$, ..., $E_n$ of the set of elements.

Figure 2 describes an example of a graph G. In this example, the graph G comprises six vertices Ve numbered from 1 to 6 and seven edges Ed. One edge links the vertices 1 and 5, another links the vertices 1 and 2, another links the vertices 5 and 2, another links the vertices 5 and 4, another links the vertices 2 and 3, another links the vertices 3 and 4, and another links the vertices 4 and 6. For sake of clarity, only one reference Ve and one reference Ed is illustrated on figure 2.

The method comprises a phase 110 of determining a partition of the vertices Ve of the graph G between two separate subsets to fulfill a partition criterion. The partition implies cutting at least an edge Ed of the graph G to obtain two separate subsets. In addition, except for a subset comprising a single vertice Ve, each vertice Ve belonging to the same subset is at least connected to another vertice Ve of said subset. The determination phase 110 is implemented by a quantum computer adapted to carry out quantum operations on qubits.

The partition criterion states that a cut number $N_{cuts}$ relative to the cut of the edges Ed of the graph G to obtain the partition, is maximum. The problem of finding the maximum cut of the edges of a graph G is also known as the Max-Cut Problem. Such problem is known to be NP-complete.

For example, when the property between each of two elements $E_i$, $E_j$ of the set of elements is the existence or not of a connection between the two elements $E_i$, $E_j$, the edges Ed only link the vertices Ve representing elements $E_1$, ..., $E_n$ for which a connection exists. In this example, the cut number $N_{cuts}$ for a partition into two subsets is the number (integer) of edges Ed cut to obtain the partition.

For example, when the property between each of two elements $E_i$, $E_j$ of the set of elements is a distance separating the two elements $E_i$, $E_j$, the edges Ed of the graph G link all the vertices Ve of the graph G to one another. Each edge Ed is associated with a weight depending on the distance separating the two elements $E_i$, $E_j$ corresponding to the vertices Ve linked by said edge Ed. In this example, the cut number $N_{cuts}$ for a partition into two subsets is equal to the sum of the weights of the edges Ed cut to obtain the partition.

For example, when the property between each of two elements $E_i$, $E_j$ of the set of elements is a level of dangerousness of infecting one or both the elements with a virus, the edges Ed of the graph G link all the vertices Ve of the graph G to one another. Each edge Ed is associated with a weight depending on the level of dangerousness between the two elements $E_i$, $E_j$ corresponding to the vertices Ve linked by said edge Ed. The cut number $N_{cuts}$ for each partition is equal to the sum of the weights of the edges Ed cut to obtain the partition.

The determination phase 110 comprises a step 110A of obtaining a Laplacian matrix L(G) corresponding to the graph G.

The Laplacian matrix is a matrix representation of a graph G. The Laplacian matrix L(G) of a graph G is defined as L=D-A, where $D$ is the degree matrix of the graph G and $A$ is the adjacency matrix of the graph G. The degree matrix is a diagonal matrix that contains information about the number of edges Ed attached to each vertex. The adjacency matrix is a square matrix whose elements indicate whether pairs of vertices Ve are adjacent or not in the graph G.

For example, the Laplacian matrix L(G) of the graph G of figure 2 is the following:

$$L(G) = \begin{pmatrix} 2 & -1 & 0 & 0 & -1 & 0 \\ -1 & 3 & -1 & 0 & -1 & 0 \\ 0 & -1 & 2 & -1 & 0 & 0 \\ 0 & 0 & -1 & 3 & -1 & -1 \\ -1 & -1 & 0 & -1 & 3 & 0 \\ 0 & 0 & 0 & -1 & 0 & 1 \end{pmatrix}$$

The determination phase 110 comprises a step 110B of transforming the Laplacian matrix L(G) of the graph G by using Pauli matrices to obtain a transformed Laplacian L'(G).

The transforming step 110B enables to obtain a matrix usable by a quantum computer.

The transformed Laplacian L'(G) is for example a sum of tensor products of Pauli matrices. For example, the sum of tensor products of Pauli matrices is expressed as in the article Variational Quantum Linear Solver Carlos Bravo-Prieto, Ryan LaRose, M. Cerezo, Yigit Subasi, Lukasz Cincio, Patrick J. Coles, arXiv:1805.10549v2. In another example, the sum is obtained by performing a partial trace over Pauli matrices.

For example, the transformed Laplacian matrix L'(G) of the graph G of figure 2 is the following:
L'(G)=-1.75-0.75 $Z_1$+0.5($X_3$-$Z_2$+$Z_1X_3$+$Z_1Z_3$+$Z_1Z_2$)+0.25($X_2X_3$+$Y_2Y_3$-$Z_2Z_3$+ $X_1$+$X_1X_3$+$X_1Z_3$+ $X_1X_2$+$X_1X_2X_3$-$X_1X_2Z_3$-$X_1Y_2Y_3$+$X_1Z_2$+$X_1Z_2X_3$+$X_1Z_2Z_3$+$Y_1Y_3$+$Y_1X_2Y_3$+$Y_1Y_2$+$Y_1Y_2X_3$-$Y_1Y_2Z_3$+ $Y_1Z_2Y_3$+$Z_1X_2X_3$+$Z_1Y_2Y_3$+$Z_1Z_3Z_3$), where X,Y,Z denotes a corresponding Pauli matrix and the subscript denothes the qubit. Tensor products and unit matrices are omitted for simplicity.

The determination phase 110 comprises a step 110C of setting random values for at least one variational parameter. The value(s) of the variational parameter(s) enable to define a partition of the vertices Ve of the graph G between the two separate subsets.

In a first example of implementation, the number of variational parameter depends on the number of vertices Ve of the graph G. In this example, each variational parameter $\theta_1$, ..., $\theta_{|V|-1}$ is associated with a different vertice Ve of the graph G. Each vertice Ve is affected to a subset of the partition depending on the value of the variational $\theta_1$, ..., $\theta_{|V|-1}$ parameter associated with said vertice Ve.

For example, the variational parameters $\theta_1$, ..., $\theta_{|V|-1}$ are numbers comprised in a bounded interval, such as an interval whose boundaries are -1 and 1. The vertices Ve associated with a variational parameter $\theta_1$, ..., $\theta_{|V|-1}$ comprised between -1 and 0 are affected to a first subset and the vertices Ve associated with a variational parameter $\theta_1$, ..., $\theta_{|V|-1}$ comprised between 0 and 1 are affected to a second subset.

In a second example of implementation (variable reduction), the variational parameters of the first example are replaced by variational functions. Hence, the outputs of the variational functions are associated with a different vertice

Ve of the graph G. Each variational function depends on only one variational parameter x, x being a number. The variational function is, for example, given by the following formula:

$$R_f(x, k, m) = \exp\left(-\exp\left(2^{m-k}\sin\left(2^k x\right) + x_0(k)\right)\right) \qquad (1)$$

where:

- $R_f$ is the variational function,
- $x$ is a variational parameter comprised between 0 and $\pi$,
- $m$ is a parameter which is superior or equal to $|V|+1$, m is for example chosen (fixed) by a user,
- $k$ corresponds to the number affected to the associated vertice Ve, k being comprised between 1 and $|V|-1$,
- $|V|$ is the number of vertices Ve of the graph G,
- exp(X) is the exponential of X, and
- $x_0(k) = \arcsin\left(\dfrac{\log_2(-\log_2(0,5))}{2^k}\right)$.

For example, the outputs of the variational function are numbers comprised in a bounded interval, such as an interval whose boundaries are -1 and 1. The vertices Ve associated with a variational function having an output comprised between -1 and 0 are affected to a first subset and the vertices Ve associated with a variational function having an output comprised between 0 and 1 are affected to a second subset.

The second example of implementation enables to reduce the number of variational parameters compared to the first example of implementation. Indeed, considering for example two binary variables $\theta_1$ and $\theta_2$ whose values are 0 or 1, $R_f$ is a function designed in such a way that substituting $\theta_1$ with $R_f(x,0,2)$ and $\theta_2$ with $R_f(x,1,2)$ covers all possible values in the binary optimization problem with a continual function (in this example m=2 but the example remains valid for other values of m). Furthermore, this implies only one variable "x". Hence, Rf is a function which upon substitution makes a multivariable binary optimization problem into a single variable continuous variable problem.

In the above examples, it should be noted that only a number of variational parameters equal to the number of vertices Ve minus one ($|V|-1$), or a number of variational functions equal to equal to the number of vertices Ve minus one, are considered. Indeed, one can trivially assign the $|V|$th vertice to the first partition. However, in another example, the number of variational parameters and/or the number of variational functions is equal to the number $|V|$ of vertices Ve.

The determination phase 110 comprises a step 110D of determining the cut number $N_{cuts}$ for the partition corresponding to the set variational parameter(s) on the basis of the transformed Laplacian L'(G).

In an example of embodiment, the cut number $N_{cuts}$ is determined on the basis of the output of a partition function U whose input data comprise the variational parameter(s). The partition function U depends on the number V of vertices Ve of the graph G and on the number n of qubits of the quantum computer enabling to carry out the method with a number V of vertices Ve.

Preferably, the partition function U comprises a multi-qubit diagonal quantum gate whose elements depends on the variational parameter(s). A quantum gate is a unitary operator described relative to unitary matrix relative to some basis.

Examples of quantum gate are defined in the article V. V. Shende, S. S. Bullock and I. L. Markov, "Synthesis of quantum-logic circuits," in IEEE Transactions on Computer-Aided Design of Integrated Circuits and Systems, vol. 25, no. 6, pp. 1000-1010, June 2006, doi: 10.1109/TCAD.2005.855930.

An example of multi-qubit diagonal quantum gate is the following: $diag\,(e^{i\pi\theta_1},\ e^{i\pi\theta_2},\ ...,\ e^{i\pi\theta_{|V|-1}},\ 1,\ ...,\ 1)$ (see notation of equation (2) below), a more general example would be $diag(e^{i\pi\theta_1},\ e^{i\pi\theta_2},\ ...,\ e^{i\pi\theta_n})$.

The partition function is, for example, expressed as follows:

$$U = diag\left(e^{i\pi\theta_1}, e^{i\pi\theta_2}, ..., e^{i\pi\theta_{|V|-1}}, 1, ..., 1\right) H_1 \otimes H_2 \otimes ... \otimes H_n \qquad (2)$$

where:

- $U$ is the partition function,
- $(\theta_1, ..., \theta_{|V|-1})$ are the variational parameters,
- $diag(a_1, ..., a_n)$ is a multi-qubit diagonal quantum gate applied to the values $a_1, ..., a_n$,

- $e^{iX} = cos(X) + i. \, sin(X)$,
- $|V|$ is the number of vertices Ve of the graph G,
- $n$ is the number of qubits of the quantum computer enabling to carry out the method with a number V of vertices Ve,
- $H_j$ is a single qubit Haddamard gate applied to the qubit j, and
- $\otimes$ is a tensor product.

In another example, each variational parameters $\theta_1, \, ..., \, \theta_{|V|-1}$ of equation (2) is replaced by the corresponding variational function of the relation (1). The substitution of the variational parameters $\theta_1, \, ..., \, \theta_{|V|-1}$ by the corresponding variational function $R_f(x,1,m), \, ..., \, R_f(x,|V|-1,m)$ enables to map the $|V|$-1 dimensional binary optimization problem to one-dimensional multimodal continual variable optimization problem.

Preferably, the cut number $N_{cuts}$ is given by the following formula:

$$N_{cuts} = 2^{n-2} \langle 0 \mid UL'U \mid 0 \rangle \qquad (3)$$

where:

- $N_{cuts}$ is the cut number,
- $n$ is the number of qubits of the quantum computer enabling to carry out the method with a number V of vertices Ve,
- $U$ is the partition function,
- $L'$ is the transformed Laplacian of the graph G, and
- $\langle \Phi \mid$ is the bra of $\Phi$ in a bra-ket notation, and
- $\mid \Psi \rangle$ is the ket of $\Psi$ in a bra-ket notation.

In this example, the cut number $N_{cuts}$ is based on the transposition in a quantum environment of a formula called the Pothen formula. The Pothen formula is given in the article Pothen, A., Simon, H. D. & Liou, K.-P. Partitioning sparse matrices with eigenvectors of graphs. SIAM journal on matrix analysis and applications 11, 430-452 (1990). The Pothen formula is for example given by the following relation:

$$N_{cuts} = \frac{1}{4} X^T L X \qquad (4)$$

where:

- $N_{cuts}$ is the cut number,
- $X$ is the state vector having a component for each vertice Ve of the graph G, each component being equal to +1 when the corresponding vertice Ve belongs to the first subset and being equal to -1 when the corresponding vertice Ve belongs to the second subset, and
- $X^T$ is the transpose vector of X.

Preferably, the number n of qubits of the quantum computer enabling to carry out the method with a number V of vertices Ve, is given by the following formula:

$$n = ceil(\log_2 \mid V \mid) \qquad (5)$$

where:

- $n$ is the number of qubits of the quantum computer enabling to carry out the method with a number V of vertices Ve,
- $|V|$ is the number of vertices Ve of the graph G,
- $ceil(X)$ is equal to the least integer greater than or equal to X, and
- $\log_2(X)$ is the binary logarithm of X.

For example, the application of this formula to the example of figure 2 enables to obtain a number n of qubits of the quantum computer enabling to carry out the method equal to 3.

The determination phase 110 comprises repeating the setting step 110C and the determining step 110D until the cut number $N_{cuts}$ is maximal so as to fulfill the partition criterion. The determined partition is obtained with the values of the variational parameter(s) corresponding to the maximum cut number $N_{cuts}$.

For example, the subset of each vertice Ve is determined directly on the basis of the value of the associated variational parameter corresponding to the maximum cut number $N_{cuts}$. Hence, the considered variational parameters are $\theta_1, ..., \theta_{|V|-1}$ considering the first example of implementation (no variable reduction).

For example, the subset of each vertice Ve is determined directly on the basis of the output of a variational function associated with said vertice Ve, the output of the variational function being obtained on the basis of the variational parameter x corresponding to the maximum cut number $N_{cuts}$. Hence, the considered variational parameter is x considering the second example of implementation (variable reduction).

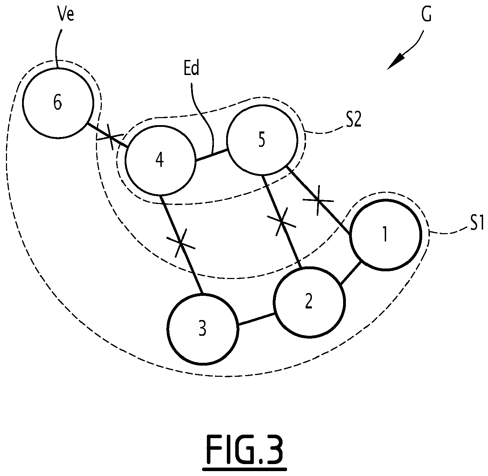

In the example of figure 2, the maximum cut number $N_{cuts}$ is equal to 4 and, as illustrated on figure 3, the following subsets are obtained with the corresponding values of the variational parameters: a first subset S1 comprising vertices 1, 2, 3 and 6, and a second subset S2 comprising vertices 4 and 5.

The method comprises a phase 120 of optimizing a functioning relative to the set of elements $E_1, ..., E_n$ by separating the elements $E_1, ..., E_n$ of the set of elements between two separate subsets on the basis of the determined partition.

The separation of the elements $E_1, ..., E_n$ of the set between two separate subsets according to a partition criterion enables to ease the operations involving the elements $E_1, ..., E_n$.

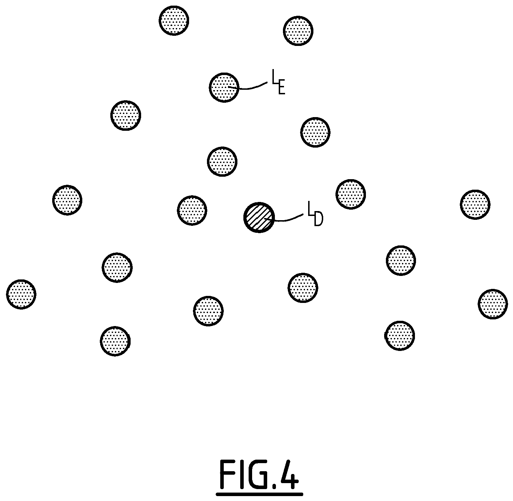

In an example of application, the elements $E_1, ..., E_n$ are exchange locations of goods or services. The functioning relative to the set of elements $E_1, ..., E_n$ aims at determining paths through all the elements of the set so as to pass one time by each element $E_1, ..., E_n$. Figure 4 illustrates an example of exchange locations $L_E$ and of a departure location $L_D$. The reference of only one exchange location $L_E$ is represented on figure 4.

In this example, the property between each of two elements $E_i, E_j$ of the set of elements is a distance separating the two elements $E_i, E_j$. The edges Ed of the graph G link all the vertices Ve of the graph G to one another. Each edge Ed is associated with a weight depending on the distance separating the two elements $E_i, E_j$ corresponding to the vertices Ve linked by said edge Ed. The cut number $N_{cuts}$ for each partition is equal to the sum of the weights of the edges Ed cut to obtain the partition.

The separation of the exchange locations $L_E$ into several clusters depending on their relative proximities enables to simplify the determination of paths. Indeed, two exchange locations $L_E$ that are close to each other are more likely to be part of the same tour. On the contrary, serving two exchange locations $L_E$ which are far away from each other may cause the determination of too expensive tours in terms of energy consumption and travel time. Thus, the described method allows partitioning the initial set of exchange locations $L_E$ between subsets regrouping exchange locations $L_E$ that look "alike" in geographical terms. Hence, two exchange locations $L_E$ that do not look alike in these terms are to appear in different subsets, thus will not be served by the same vehicle tour. In other word, the described method enables to define two subsets where it is not too costly to navigate within one subset, but all in all costly to traverse group.

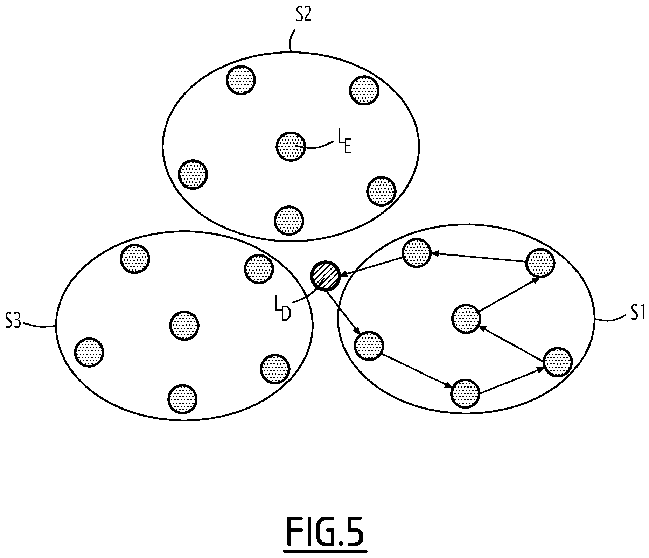

After the separation of the exchange locations $L_E$ in subsets, a path is determined between the exchange locations $L_E$ of each subset. It is easier to optimize the paths because the number of exchange locations $L_E$ is reduced compared to the initial set of exchange locations $L_E$. Figure 5 illustrates the separation of the exchange locations $L_E$ into three subsets S1, S2, S3 (for example two first subsets are obtained with the method, then one of the subset is divided again by applying again the method). An example of path is illustrated for the subset S1.

In another example of application, the elements $E_1, ..., E_n$ of the set are electronic devices, each device being directly or indirectly (i.e. via another or other device(s) of the set) in communication with the other devices of the set. Some elements $E_1, ..., E_n$ of the set are infected with a virus, and the other are non-infected devices. The property between each of two elements $E_i, E_j$ of the set of elements is the existence or not of a direct communication linking an infected device and a non-infected device. The optimization of the functioning of the electronic devices consists in cutting the maximum of the communication between the infected devices and the non-infected devices. The cut number $N_{cuts}$ for each partition is equal to the number of edges Ed to be cut to obtain the partition.

In still another example relative to viruses and electronic devices (the elements of the set), the property between each of two elements $E_i, E_j$ of the set of elements is a level of dangerousness of infecting one or both the elements with a virus. The edges Ed of the graph G link all the vertices Ve of the graph G to one another. Each edge Ed is associated with a weight depending on the level of dangerousness between the two elements $E_i, E_j$ corresponding to the vertices Ve linked by said edge Ed. The cut number $N_{cuts}$ for each partition is equal to the sum of the weights of the edges Ed cut to obtain the partition.

Consequently, subsets of elements are obtained with the described method, which enables optimizing a functioning relative to the elements $E_1, ..., E_n$. The optimization consists for example in defining a path between the elements $E_1, ..., E_n$ of a same subset, or in isolating the elements $E_1, ..., E_n$ of one of the subset from those of the other subset.

The described method is a way of solving the max-cut problem, which cannot be solved by a classical computer within a polynomial time when the amount of data is large. Hence, by using a quantum computer, the described method improves the calculation time relative to the max-cut problem for solving a larger amount of problem such as problem in the field of mobility.

The person skilled in the art will understand that the embodiments and variants described above can be combined to form new embodiments provided that they are technically compatible.

**Claims**

1. A method for optimizing a functioning relative to a set of elements ($E_1$, ..., $E_n$), each element ($E_i$) of the set having a property relative to each other element ($E_j$) of the set, the method comprising the following phases:

   - obtaining a graph (G) comprising vertices (Ve) and edges (Ed), the edges (Ed) linking the vertices (Ve) to one another so that each vertice (Ve) is linked to at least another vertice (Ve), the vertices (Ve) representing the elements ($E_1$, ..., $E_n$) of the set of elements, the edges (Ed) representing the properties between the elements ($E_1$, ..., $E_n$) of the set of elements,
   - determining a partition of the vertices (Ve) of the graph (G) between two separate subsets so as to fulfill a partition criterion, the partition implying cutting at least an edge (Ed) of the graph (G), the partition criterion stating that a cut number ($N_{cuts}$) relative to the cut of the edges (Ed) of the graph (G) to obtain the partition is maximum, the determining phase being implemented by a quantum computer adapted to carry out quantum operations on qubits, the determining phase comprising the following steps:

     • obtaining a Laplacian matrix (L(G)) corresponding to the graph (G),
     • transforming the Laplacian matrix (L(G)) of the graph (G) by using Pauli matrices to obtain a transformed Laplacian (L'(G)),
     • setting a random value for at least one variational parameter ($\theta_1$, ..., $\theta_{|V|-1}$ ; x), the value of the or each variational parameter ($\theta_1$, ..., $\theta_{|V|-1}$ ; x) enabling to define a partition of the vertices (Ve) of the graph (G) between the two separate subsets,
     • determining the cut number ($N_{cuts}$) for the partition corresponding to the set variational parameter(s) ($\theta_1$, ..., $\theta_{|V|-1}$ ; x) on the basis of the transformed Laplacian (L'(G)), and
     • repeating the setting step and the determining step until the cut number ($N_{cuts}$) is maximal so as to fulfill the partition criterion, the determined partition being obtained with the value of the or each variational parameter ($\theta_1$, ..., $\theta_{|V|-1}$ ; x) corresponding to the maximum cut number ($N_{cuts}$), and

   - optimizing a functioning relative to the set of elements by separating the elements ($E_1$, ..., $E_n$) of the set of elements between two separate subsets on the basis of the determined partition.

2. The method according to claim 1, wherein the cut number ($N_{cuts}$) is determined on the basis of the output of a partition function (U) whose input data comprise the or each variational parameter ($\theta_1$, ..., $\theta_{|V|-1}$ ; x), the partition function (U) depending on the number (V) of vertices (Ve) of the graph (G) and on the number (n) of qubits of the quantum computer enabling to carry out the method.

3. The method according to claim 2, wherein the partition function (U) comprises a multi-qubit diagonal quantum gate whose elements depends on the or each variational parameter ($\theta_1$, ..., $\theta_{|V|-1}$ ; x).

4. The method according to claim 2 or 3, wherein the partition function (U) is expressed as follows:

$$U = diag\left(e^{i\pi A_1}, e^{i\pi A_2}, ..., e^{i\pi A_{|V|-1}}, 1, ..., 1\right) H_1 \otimes H_2 \otimes ... \otimes H_n$$

   where:

   • $U$ is the partition function,
   • ($A_1$, ..., $A_{|V|-1}$) are either variational parameters or variational functions depending on at least one variational parameter,
   • $diag(\theta_1, ..., \theta_{|V|-1})$ is a multi-qubit diagonal quantum gate applied to $\theta_1$, ..., $\theta_{|V|-1}$,
   • $e^{iX} = cos(X) + i.sin(X)$,
   • $|V|$ is the number of vertices of the graph (G),
   • $n$ is the number of qubits of the quantum computer enabling to carry out the method,
   • $H_j$ is a single qubit Haddamard gate applied to the qubit j, and

• ⊗ is a tensor product.

**5.** The method according to any one of claim 2 to 4, wherein the cut number ($N_{cuts}$) is given by the following formula:

$$N_{cuts} = 2^{n-2}\langle 0 \mid UL'U \mid 0\rangle$$

where:

• $N_{cuts}$ is the cut number,
• $n$ is the number of qubits of the quantum computer enabling to carry out the method,
• $U$ is the partition function,
• $L'$ is the transformed Laplacian of the graph (G), and
• $\langle \Phi \mid$ is the bra of $\Phi$ in a bra-ket notation, and
• $\mid \Psi \rangle$ is the ket of $\Psi$ in a bra-ket notation.

**6.** A method according to any one of claims 2 to 5, wherein the number (n) of qubits of the quantum computer enabling to carry out the method is given by the following formula:

$$n = ceil(\log_2 \mid V \mid)$$

where:

• $n$ is the number of qubits of the quantum computer enabling to carry out the method,
• $|V|$ is the number of vertices of the graph (G),
• $ceil(X)$ is equal to the least integer greater than or equal to X, and
• $\log_2(X)$ is the binary logarithm of X.

**7.** A method according to any one of claims 1 to 6, wherein the method involved only one variational parameter (x) enabling to compute the output of variational functions, the number of variational functions depends on the number of vertices (Ve), each variational function being associated with a different vertice (Ve) of the graph (G), the outputs of the variational functions enabling to define a partition of the vertices (Ve) of the graph (G) between two separate subsets.

**8.** A method according to claim 7, wherein each variational function associated with a vertice (Ve) of the graph (G) is given by the following formula:

$$R_f(x, k, m) = \exp(-\exp\left(2^{m-k}\sin(2^k x) + x_0(k)\right))$$

where:

• $R_f$ is the variational function,
• $x$ is a variational parameter comprised between 0 and $\pi$,
• $m$ is a parameter which is superior or equal to $|V|+1$, m is for example fixed by a user,
• $k$ corresponds to the number affected to the associated vertice Ve, k being comprised between 1 and $|V|-1$,
• $|V|$ is the number of vertices Ve of the graph G,
• $\exp(X)$ is the exponential of X, and
• $x_0(k) = \arcsin(\frac{\log_2(-\log_2(0,5))}{2^k})$.

**9.** A method according to any one of claims 1 to 8, wherein the property between each of two elements ($E_i$, $E_j$) of the set of elements is :

- the existence or not of a connection between the two elements ($E_i$, $E_j$), such as a physical connection or a wireless connection, or
- a distance separating the two elements ($E_i$, $E_j$), or
- a level of dangerousness of infecting one or both the elements ($E_i$, $E_j$) with a virus.

10. A method according to claim 9, wherein the property between each of two elements ($E_i$, $E_j$) of the set of elements is a distance separating the two elements ($E_i$, $E_j$), the edges (Ed) of the graph (G) linking all the vertices (Ve) of the graph (G) to one another, each edge (Ed) being associated with a weight depending on the distance separating the two elements ($E_i$, $E_j$) corresponding to the vertices (Ve) linked by said edge (Ed), the cut number ($N_{cuts}$) for each partition being equal to the sum of the weights of the edges (Ed) cut to obtain the partition.

11. A method according to claim 10, wherein the elements ($E_1$, ..., $E_n$) are exchange locations ($L_E$) of goods or services, the functioning relative to the set of elements comprises the determination of paths through all the elements ($E_1$, ..., $E_n$) of the set of elements, the efficiency of the functioning being optimized by determining separate paths for the elements ($E_1$, ..., $E_n$) belonging to separate subsets.

12. A method according to claim 9, wherein the elements ($E_1$, ..., $E_n$) of the set are electronic devices, each device being directly or indirectly in communication with the other devices of the set, at least one element ($E_1$, ..., $E_n$) of the set being infected with a virus, the property between each of two elements ($E_i$, $E_j$) of the set of elements being the existence or not of a direct communication linking an infected device and a non-infected device, the cut number ($N_{cuts}$) for each partition being equal to the number of edges (Ed) to be cut to obtain the partition.

13. A method according to claim 9, wherein the elements ($E_1$, ..., $E_n$) of the set are electronic devices, the property between each of two elements ($E_i$, $E_j$) of the set of elements being a level of dangerousness of infecting one or both the elements with a virus, each edge (Ed) being associated with a weight depending on the level of dangerousness between the two elements ($E_i$, $E_j$) corresponding to the vertices (Ve) linked by said edge (Ed), the cut number ($N_{cuts}$) for each partition being equal to the sum of the weights of the edges (Ed) cut to obtain the partition.

14. A computer program product comprising a readable information carrier having stored thereon a computer program comprising program instructions, the computer program being loadable onto a data processing unit and causing a method according to any one of claims 1 to 13 to be carried out when the computer program is carried out on the data processing unit.

15. A readable information carrier on which a computer program product according to claim 14 is stored.

```
┌─────────────────────────────────────────┐
│                    100                    │
│                   ───                     │
└─────────────────────────────────────────┘
                      │
                      ▼
┌─────────────────────────────────────────────┐
│  ┌───────────────────────────────────────┐   │
│  │               110A                     │   │
│  │              ────                      │   │
│  └───────────────────────────────────────┘   │
│                    │                          │
│                    ▼                          │
│  ┌───────────────────────────────────────┐   │
│  │               110B                     │   │
│  │              ────                      │   │
│  └───────────────────────────────────────┘   │         110
│                    │                          │  ────
│                    ▼                          │
│  ┌───────────────────────────────────────┐   │
│ →│               110C                     │   │
│  │              ────                      │   │
│  └───────────────────────────────────────┘   │
│                    │                          │
│                    ▼                          │
│  ┌───────────────────────────────────────┐   │
│  │               110D                     │   │
│  │              ────                      │   │
│  └───────────────────────────────────────┘   │
└─────────────────────────────────────────────┘
                      │
                      ▼
┌─────────────────────────────────────────┐
│                    120                    │
│                   ───                     │
└─────────────────────────────────────────┘
```

# FIG.1

FIG.2

## FIG.3

$L_E$

$L_D$

FIG.4

## FIG.5

Europäisches
Patentamt

European
Patent Office

Office européen
des brevets

**EUROPEAN SEARCH REPORT**

Application Number

EP 21 30 6155

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GAVIN E CROOKS: "Performance of the Quantum Approximate Optimization Algorithm on the Maximum Cut Problem", ARXIV.ORG, CORNELL UNIVERSITY LIBRARY, 201 OLIN LIBRARY CORNELL UNIVERSITY ITHACA, NY 14853, 20 November 2018 (2018-11-20), XP080937231, | 1,2,5-15 | INV. G06N10/60 G06Q10/04 |
| A | * the whole document * | 3,4 | |
| A | SLIMANE THABET ET AL: "Laplacian Eigenmaps with variational circuits: a quantum embedding of graph data", ARXIV.ORG, CORNELL UNIVERSITY LIBRARY, 201 OLIN LIBRARY CORNELL UNIVERSITY ITHACA, NY 14853, 10 November 2020 (2020-11-10), XP081810657, * Section 3 * | 1-15 | |
| A | JARROD R MCCLEAN ET AL: "Low depth mechanisms for quantum optimization", ARXIV.ORG, CORNELL UNIVERSITY LIBRARY, 201 OLIN LIBRARY CORNELL UNIVERSITY ITHACA, NY 14853, 19 August 2020 (2020-08-19), XP081947186, DOI: 10.1103/PRXQUANTUM.2.030312 * Sections III, IV and XI * | 1-15 | TECHNICAL FIELDS SEARCHED (IPC) G06N G06Q |

The present search report has been drawn up for all claims

| Place of search | Date of completion of the search | Examiner |
|---|---|---|
| The Hague | 8 February 2022 | Targon, Valerio |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CARLOS BRAVO-PRIETO ; RYAN LAROSE ; M. CEREZO ; YIGIT SUBASI ; LUKASZ CINCIO ; PATRICK J. COLES.** *arXiv:1805.10549v2*
- **V. V. SHENDE ; S. S. BULLOCK ; I. L. MARKOV.** Synthesis of quantum-logic circuits. *IEEE Transactions on Computer-Aided Design of Integrated Circuits and Systems,* June 2006, vol. 25 (6), 1000-1010
- **POTHEN, A. ; SIMON, H. D. ; LIOU, K.-P.** Partitioning sparse matrices with eigenvectors of graphs. *SIAM journal on matrix analysis and applications,* 1990, vol. 11, 430-452